# EUROPEAN PATENT SPECIFICATION

(11) **EP 1 367 488 B1**
(45) Date of publication and mention of the grant of the patent: **26.04.2006**
(21) Application number: 02012072.1
(22) Date of filing: 31.05.2002
(51) Int. Cl.: G06F 11/00, G06F 11/07

(54) **Method and computer system for network-job management**
Verfahren und Rechneranordnung für vernetzte Aufgabenverwaltung
Procédé et système d'ordinateurs pour gérer des tâches dans un réseau

(43) Date of publication of application: 03.12.2003
(73) Proprietor: SAP AG, 69190 Walldorf (DE)
(72) Inventor: Babutzka, Dieter, 69242 Mühlhausen-Rettigheim (DE); Klotzek, Hans-Georg, 69168 Wiesloch (DE)
(74) Representative: Rocke, Carsten

(56) References cited:
- EP-A- 0 457 109
- "ROUTING LOGGED ERRORS IN AIX" IBM TECHNICAL DISCLOSURE BULLETIN, IBM CORP. NEW YORK, US, vol. 32, no. 6A, 1 November 1989 (1989-11-01), pages 192-193, XP000043172 ISSN: 0018-8689

## Description

### Field of the Invention

The present invention generally relates to electronic data processing, and more particularly, relates to method, computer program product and system for network-job management.

### Background of the Invention

Computer networks often include a plurality of computer systems. Typically, each computer system has a technical system administrator who is responsible for all kinds of technical issues related to the computer system. For example, a technical system administrator takes care of user authorizations, setting up tape-mounts, system backup, database reorganization, etc. Many of these tasks are performed via so-called batch jobs (referred to a jobs, hereinafter). A job is typically run in the background (not on the user-interaction level of the computer system) at a time where the system load through user-interaction processes is low in order to avoid slowing down system response times for users. For example, a scheduler of the computer system performs the task of starting a job when a predefined start condition is fulfilled. In many cases a second job cannot start before a first job has ended because the first job generates output data that are needed as input for the second job. A problem can occur when the first job dies before having generated all output data. In this case the second job will not receive all required input data. For example, a job can die because of a missing user authorization or a failed tape-mount. The technical system administrator gets notified and can fix the error.

In the case of a computer network, usually dependencies between multiple batch jobs of different computer systems exist. That is, for example, a job in a first computer system should not start before successful completion of a job in a second computer system. Usually, a network scheduler is used to control the start and end of various jobs in different computer systems at the computer network level. Typically, in a computer network that is used for business purposes, a business oriented administrator is responsible for the network scheduler. The business oriented administrator gets notified when a job from the first computer system dies and, therefore, a dependent job in the second system does not start. However, the technical administrator of the second system only gets notified that the dependent job did not start as scheduled.

In the document "ROUTING LOGGED ERRORS IN AIX" IBM TECHNICAL DISCLOSURE BULLETIN, IBM CORP. NEW YORK, US, vol. 32, no. 6A, 1 November 1989 (1989-11-01), pages 192-193, a first job sends error information to an error demon, a second application has itself registered with the error demon as requiring error information of the first application (and is thus dependent on the first application) and the error demon then sends error information from the first application to the second application. The demon uses a configuration file to identify the targets for routing the error notifications.

There is an ongoing need to improve error analysis support for technical computer system administrators in the case of job failure in a computer network system.

### Summary of the Invention

The technical problem of untraceable job-failure in a computer network system is solved by a method according to claim 1. Further embodiments of the invention are a further method according to claim 3, a computer system according to claim 6, computer program products according to claims 4 and 5 and a second computer according to claim 8.

By notifying a computer of the reason why a specific job did not start on the computer, a corresponding error analysis is improved for the technical system administrator of the computer. According to the invention, the notification can be in the form of a job-net status of a job-net that defines dependencies between jobs of various computers in the computer system.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of a computer system that can be used with an embodiment of the present invention;
- FIG. 2: illustrates details of a job-net in one embodiment of the computer system;
- FIG. 3: illustrates a flow chart that can be implemented with one embodiment of the computer system; and
- FIGS. 4A, 4B: illustrate simplified flow charts of two methods for error analysis in case of job failure that can be implemented with embodiments of the invention.

### Detailed Description of the Invention

Wherever possible, the same reference numbers will be used throughout the drawings to refer to the same or like parts. For convenience of explanation a list of references is provided prior to the claims.

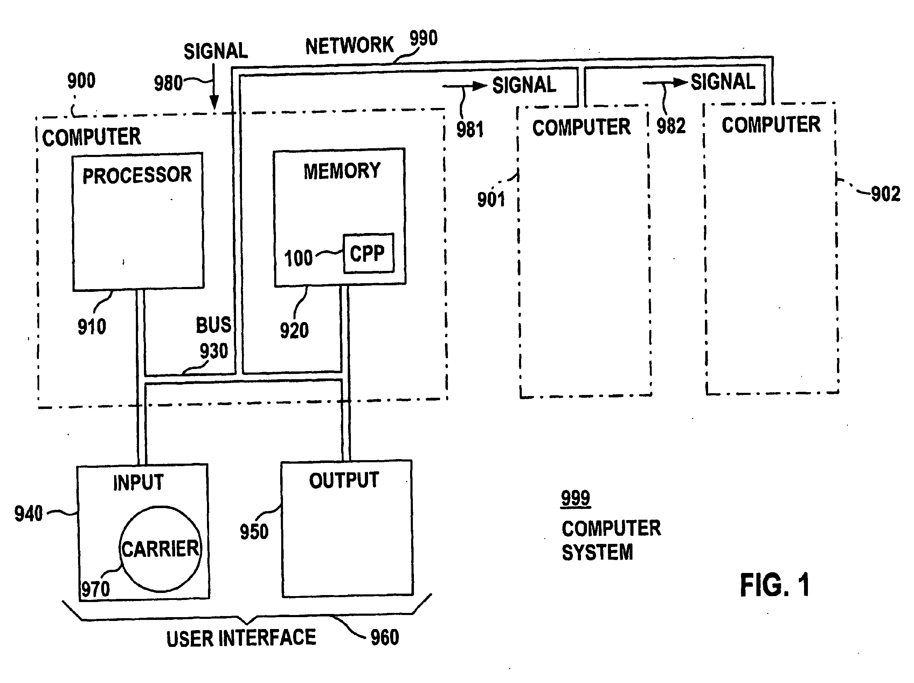

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

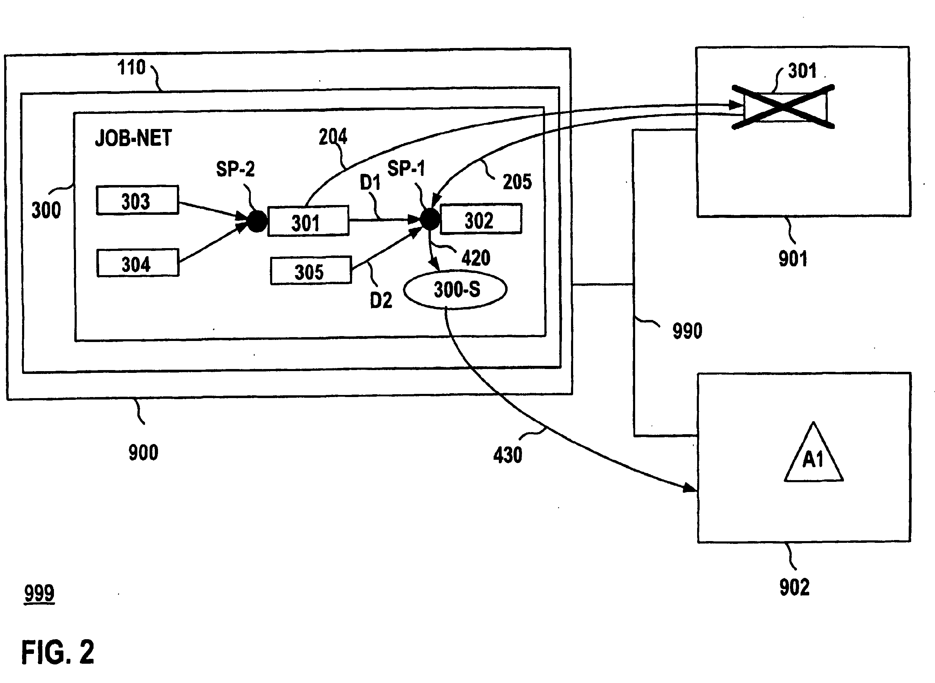

FIG. 2 illustrates details of job-net 300 in one embodiment of computer system 999. In the example, computer system 999 has computer 900, first computer 901 and second computer 902 which are connected to each other via network 990.

Job-net 300 is stored on computer 900 of computer system 999. For example, job-net 300 can be stored in memory 920 (cf. FIG. 1) of computer 900. In one embodiment job-net 300 can be part of a network scheduler 110 that schedules jobs of any computer in computer system 999. In another embodiment (not shown) job-net 300 can be connected to the network scheduler via a corresponding interface. Network scheduler 110 is also referred to as scheduler 110, hereinafter. Job-net 300 can also be stored on any other computer of computer system 999. For example, those skilled in the art can implement job-net 300 as a table in a relational database system.

In the example, job-net 300 defines dependencies between jobs 301-305. The dependencies are illustrated by straight arrows and indicate that the start of a specific job is dependent on the successful completion of another job. For example, second job 302 has dependency D1 on first job 301 and has dependency D2 on further job 305. In other words, second job 302 must not start before first job 301 and further job 305 have been successfully completed. For convenience of explanation, the following discussion only takes into account dependency D1. Those skilled in the art can apply the invention to further dependencies, such as dependency D2.

The following scenario is used to explain details of the invention. However, the scenario is not limiting the scope of the invention with regards to the specific embodiment of computer system 999 that is used in the scenario. Scheduler 110 starts 204 first job 301 on first computer 901. For some reason first job 301 is not successfully completed (illustrated by being crossed out) on first computer 901. For example, a reason can be that the user that was used to logon to first computer 901 has no authorization for starting first job 301. Another reason can be that first job 301 unsuccessfully tries to mount a tape which is not up and running. First job 301 reports a job failure that is received 205 by scheduler 110.

Preferably, job-net 300 includes synchronization points, such as SP-1 and SP-2. A synchronization point corresponds to a predefined location in job-net 300, where a status of job-net 300 can be determined. In the example, synchronization point SP-1 is defined to determine 420 job-net status 300-S before starting second job 302 on second computer 902. Advantageously, job-net status 300-S includes the status of the whole job-net. In other words, job-net status 300-S includes a snapshot of the status information that is available at each synchronization point SP-1, SP-2 of job-net 300 at a specific point in time (e.g. after having received 205 first job 301 failure report). Those skilled in the art can implement job-net status 300-S in the format of a data structure, such as a table or an XML-file.

In the example, job-net status 300-S includes the information that first job 301 was not successfully completed on first computer 901. Therefore, the start condition for second job 302 (successful completion of first job 301 and further job 305) is not fulfilled, no matter what the status of further job 305 is. Instead of starting second job 302 on second computer 902, scheduler 110 transmits 430 job-net status 300-S to second computer 902.

By making job-net status 300-S available to second computer 902, a technical system administrator can easily identify, why second job 302 was not started as originally scheduled. Without knowing the information from other computers in computer system 999, the technical system administrator would try first to identify an error in second computer 902 where he/she is responsible for. In a preferred embodiment, second computer 902 facilitates the error analysis by creating job failure alert A1. For example, job failure alert A1 can initiate a corresponding pop-up window on the technical system administrator's user-interface. Other implementations of alerts, such as audio signals, are known by those skilled in the art.

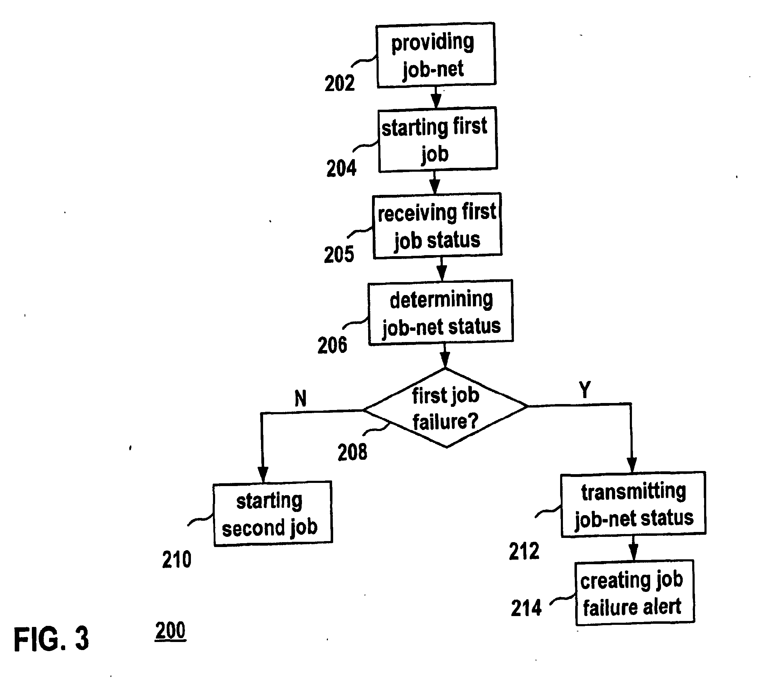

FIG. 3 illustrates flow chart 200 that can be implemented with one embodiment of computer system 999 (cf. FIG. 2).

The behaviour of computer system 999, as described in FIG. 2, can be summarized by using flow chart 200.

Computer 900 (cf. FIG. 2) provides 202 job-net 300. For example, job-net 300 can be consolidated from various jobs in various computers (e.g. 901, 902, cf. FIG. 2) of computer system 999.

Computer 900 starts 204 first job 301 (cf. FIG. 2) on first computer 901. Preferably, this is achieved by using scheduler 110 (cf. FIG. 2).

Computer 900 receives 205 a status of first job 301 from first computer 901.

Computer 900 then determines 206 job-net status 300-S. Preferably, computer 900 uses synchronization points SP-1, SP-2 (cf . FIG. 2) of job-net 300 to create a snap shot of each job's status at a corresponding synchronization point. In the example, computer 900 detects 208 a failure of first job 301 and includes this information in job-net status 300-S.

For example, in case first job 301 and further job 305 defining a start condition (dependencies D1, D2) for second job 302 were successfully completed at the corresponding synchronization point SP-1, second job 302 is started 210 in second computer 902.

In case either first job 301 (as in the example) or further job 305 failed, computer 900 transmits 212 job-net status 300-S to second computer 902. Second job 302 is not started.

Advantageously, second computer 902 creates 214 job failure alert A1 (cf. FIG. 2) to notify a technical system administrator of the reason why second job 302 was not started.

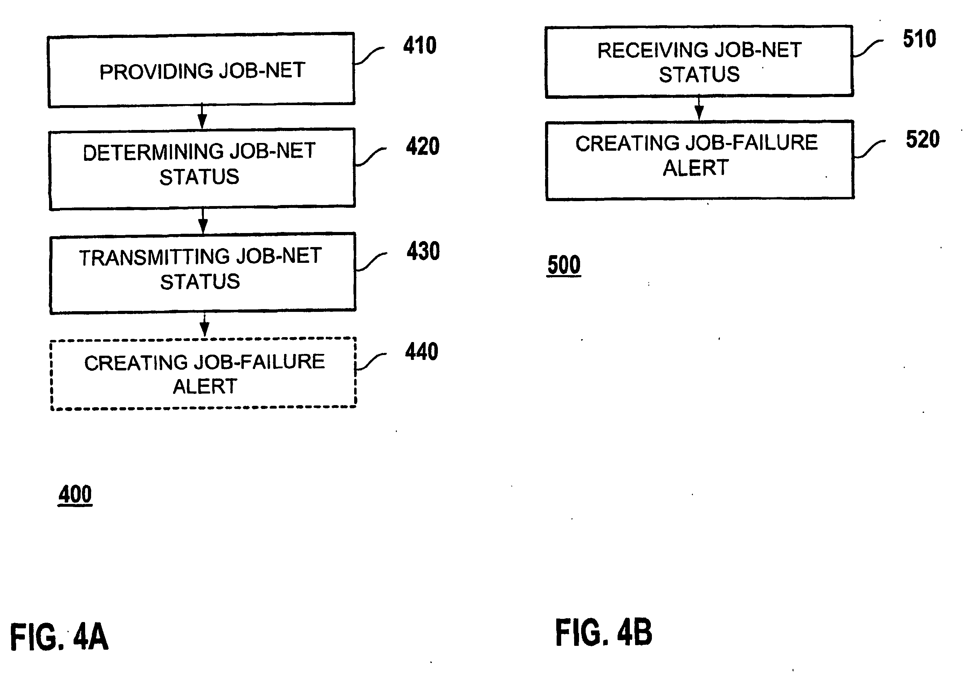

FIGS. 4A, 4B illustrate simplified flow charts of methods 400, 500 for error analysis in case of job failure that can be implemented with embodiments of the invention. ,

For example, methods 400, 500 can be executed by computers 900, 902 (cf. FIG. 1) of computer system 999 (cf. FIG. 1). Computer program product 100 (cf. FIG. 1) includes instructions that cause at least a processor (e.g. 910) of computer 900 to execute the steps of method 400. Computer program product 102 (cf. FIG. 1) includes instructions that cause at least a processor (e.g. 912) of second computer 902 to execute the steps of method 500.

Computer program products 100, 102 can be stored in data carriers 970, 972 (cf. FIG. 1), respectively, or can be carried by signals 980, 982, respectively. Preferably, computer program product 100 is loaded into memory 920 of computer 900 and computer program product 102 (cf. FIG. 1) is loaded into memory 922 of second computer 902.

FIG. 4A illustrates a simplified flow chart of method 400 for error analysis in case of job failure in computer system 999. Computer system 999 has at least first computer 901 and second computer 902. Method 400 includes the steps providing job-net 410, determining job-net status 420 and transmitting job-net status 430. Method 400 also includes the optional (dashed frame) step creating job failure alert 440.

In the providing job-net step 410, job-net 300 is provided defining the start of second job 302 of second computer 902 to be dependent on the successful completion of first job 301 of first computer 901.

In the determining job-net status step 420, job-net status 300-S of job-net 300 is determined. Preferably, the determining job-net status step 420 is performed at a pre-defined synchronization-point SP-1.

In the transmitting job-net status step 430, job-net status 300-S is transmitted to second computer 902 in case of unsuccessful completion of first job 301.

Preferably, steps 410-430 are executed by computer 900 of computer system 999. However, any other computer of computer system 999 may be used as well.

In the optional creating job failure alert step 440, second computer 902 creates job failure alert A1.

FIG. 4B illustrates a simplified flow chart of method 500 for error analysis in case of job failure in computer system 999. Computer system 999 has at least first computer 901 and second computer 902. Method 500 includes the steps receiving job-net status 510 and creating job failure alert 520.

In the receiving job-net status step 510, second computer 902 receives job-net status 300-S of job-net 300 from, for example, computer 900 of computer system 999. Job-net 300 defines the start of second job 302 of second computer 902 to be dependent on the successful completion of first job 301 of first computer 901. Job-net status 300-S indicates the unsuccessful completion of first job 301.

In the creating job failure alert 520 a job failure alert (A1) on the second computer (902).

| **Reference** | **Description** |
|---|---|
| 100, 102 | Computer program product |
| 110 | Scheduler |
| 200 | Flow chart |
| 2xx | Flow chart steps |
| 300 | Job-net |
| 301-305 | Jobs |
| Dx | Dependencies |
| SP-x | Synchronization points |
| 300-S | Job-net status |
| 400, 500 | Methods |
| 4xx, 5xx | Method steps |
| 999 | Computer system |
| 900, 901, 902 | Computers |
| 910, 911, 912 | Processors |
| 920, 921, 922 | Memories |
| 940 | Input device |
| 950 | Output device |
| 960 | User interface |
| 970, 972 | Program carrier (computer readable device) |
| 980, 982 | Program signal |

Reference numbers

## Claims

1. A method (400) for error analysis in case of job failure in a computer system (999) having at least a first computer (901) and a second computer (902); the method (400) comprising the following steps:
providing (410) a job-net (300), wherein the job-net (300) defines the start of a second job (302) of the second computer (902) to be dependent on the successful completion of a first job (301) of the first computer (901);
determining (420) a job-net status (300-S) of the job-net (300) at a predefined synchronization-point (SP-1) of the job-net (300), wherein the job-net status (300-S) includes a snapshot of status information that is available at the predefined synchronization point (SP-1) and further synchronization points (SP-2) of the job-net (300) at a specific point in time; and
in case of unsuccessful completion of the first job (301) transmitting (430) the job-net status (300-S) to the second computer (902).

2. The method (400) of claim 1 comprising the further step:
creating (440) a job failure alert (A1) on the second computer (902).

3. A method (500) for error analysis in case of job failure in a computer system (999) having at least a first computer (901) and a second computer (902); the method (500) comprising the following steps:
receiving (510) on the second computer (902) a job-net status (300-S) of a job-net (300), wherein the job-net (300) defines the start of a second job (302) of the second computer (902) to be dependent on the successful completion of a first job (301) of the first computer (901); the job-net status (300-S) including a snapshot of status information that is available at a plurality of synchronization points (SP-1, SP-2) of the job-net (300) at a specific point in time, the job-net status (300-S) indicating the unsuccessful completion of the first job (301); and
creating (520) a job failure alert (A1) on the second computer (902).

4. A computer program product (100) comprising a plurality of instructions for error analysis in case of job failure in a computer system (999) that has at least a first computer (901) and a second computer (902); the computer program product (100), when loaded into a memory (920) of a computer (900), causing at least one processor (910) of the computer (900) to execute the following steps:
providing (410) a job-net (300), wherein the job-net (300) defines the start of a second job (302) of the second computer (902) to be dependent on the successful completion of a first job (301) of the first computer (901);
determining (420) a job-net status (300-S) of the job-net (300) at a predefined synchronization-point (SP-1) of the job-net (300), wherein the job-net status (300-S) includes a snapshot of status information that is available at the predefined synchronization point (SP-1) and further synchronization points (SP-2) of the job-net (300) at a specific point in time; and
in case of unsuccessful completion of the first job (301) transmitting (430) the job-net status (300-S) to the second computer (902).

5. A computer program product (102) comprising a plurality of instructions for error analysis in case of job failure in a computer system (999) that has at least a first computer (901) and a second computer (902); the computer program product (102), when loaded into a memory (922) of the second computer (902), causing at least one processor (912) of the second computer (902) to execute the following steps:
receiving (510) on the second computer (902) a job-net status (300-S) of a job-net (300), wherein the job-net (300) defines the start of a second job (302) of the second computer (902) to be dependent on the successful completion of a first job (301) of the first computer (901); the job-net status (300-S) including a snapshot of status information that is available at a plurality of synchronization points (SP-1, SP-2) of the job-net (300) at a specific point in time, the job-net status (300-S) indicating the unsuccessful completion of the first job (301); and
creating (520) a job failure alert (A1) on the second computer (902).

6. A computer system (999) for error analysis in case of job failure, wherein the computer system (999) has at least a first computer (901) and a second computer (902); the computer system (999) comprising:
a memory (920) storing a job-net (300), wherein the job-net (300) defines the start of a second job (302) of the second computer (902) to be dependent on the successful completion of a first job (301) of the first computer (901); and
a processor (910) configured to determine (420) a job-net status (300-S) of the job-net (300) at a predefined synchronization-point (SP-1) of the job-net (300), wherein the job-net status (300-S) includes a snapshot of status information that is available at the predefined synchronization point (SP-1) and further synchronization points (SP-2) of the job-net (300) at a specific point in time, and in case of unsuccessful completion of the first job (301) to transmit (430) the job-net status (300-S) to the second computer (902).

7. The computer system (999) of claim 6, wherein the second computer (902) is configured to create (440) a job failure alert (A1).

8. A second computer (902) in a computer system (999) for error analysis in case of job failure, wherein the computer system (999) further has at least a first computer (901); comprising:
a memory (922) configured to receive (510) a job-net status (300-S) of a job-net (300), wherein the job-net (300) defines the start of a second job (302) of the second computer (902) to be dependent on the successful completion of a first job (301) of the first computer (901); the job-net status (300-S) including a snapshot of status information that is available at a plurality of synchronization points (SP-1, SP-2) of the job-net (300) at a specific point in time, the job-net status (300-S) indicating the unsuccessful completion of the first job (301); and
a processor (912) configured to create (520) a job failure alert (A1) on the second computer (902).

## Patentansprüche

1. Verfahren (400) zur Fehleranalyse im Fall eines Job- bzw. Aufgabenfehlers in einem Computersystem (999), das wenigstens einen ersten Computer (901) und einen zweiten Computer (902) aufweist; wobei das Verfahren (400) die folgenden Schritte umfaßt:
Bereitstellen (410) eines Aufgabennetzes (300), wobei das Aufgabennetz (300) den Start einer zweiten Aufgabe (302) des zweiten Computers (902) definiert, um von der erfolgreichen Vervollständigung einer ersten Aufgabe (301) des ersten Computers (901) abhängig zu sein;
Bestimmen (420) eines Aufgabennetzzustands bzw. -status (300-S) des Aufgabennetzes (300) an einem vordefinierten Synchronisationspunkt (SP-1) des Aufgabennetzes (300), wobei der Aufgabennetzstatus (300-S) eine Momentaufnahme der Status- bzw. Zustandsinformation enthält, welche an dem vorbestimmten Synchronisationspunkt (SP-1) und weiteren Synchronisationspunkten (SP-2) des Aufgabennetzes (300) an einem bestimmten bzw. spezifischen Zeitpunkt verfügbar ist; und
im Fall einer nicht erfolgreichen Vervollständigung bzw. eines nicht erfolgreichen Abschlusses der ersten Aufgabe (301) Übertragen (430) des Aufgabennetzstatus (300-S) an den zweiten Computer (902).

2. Verfahren (400) nach Anspruch 1, umfassend den weiteren Schritt:
Erzeugen (440) eine Aufgabenfehlerwarnung (A1) auf dem zweiten Computer (902).

3. Verfahren (500) zur Fehleranalyse im Fall eines Aufgabenfehlers in einem Computersystem (999), das wenigstens einen ersten Computer (901) und einen zweiten Computer (902) aufweist; wobei das Verfahren (500) die folgenden Schritte umfaßt:
Erhalten (510) an dem zweiten Computer (902) eines Aufgabennetzstatus bzw. - zustands (300-S) eines Aufgabennetzes (300), wobei das Aufgabennetz (300) den Start einer zweiten Aufgabe (302) des zweiten Computers (902) definiert, um von der erfolgreichen Vervollständigung einer ersten Aufgabe (301) des ersten Computers (901) abhängig zu sein; wobei der Aufgabennetzstatus (300-S) eine Momentaufnahme der Statusinformation enthält, welche an einer Mehrzahl von Synchronisationspunkten (SP-1, SP-2) des Aufgabennetzes (300) an einem spezifischen bzw. bestimmten Zeitpunkt verfügbar ist, wobei der Aufgabennetzstatus (300-S) die nicht erfolgreiche Vervollständigung bzw. den nicht erfolgreichen Abschluß der ersten Aufgabe (301) anzeigt; und
Erzeugen (520) einer Aufgabenfehlerwarnung (A1) an dem zweiten Computer (902).

4. Computerprogrammprodukt (100), umfassend eine Mehrzahl von Instruktionen zur Fehleranalyse im Fall eines Aufgabenfehlers in einem Computersystem (999), welches wenigstens einen ersten Computer (901) und einen zweiten Computer (902) aufweist; wobei das Computerprogrammprodukt (100), wenn es in einen Speicher (920) eines Computers (900) geladen ist, wenigstens einen Prozessor (910) des Computers (900) veranlaßt, die folgenden Schritte auszuführen:
Bereitstellen (410) eines Aufgabennetzes (300), wobei das Aufgabennetz (300) den Start einer zweiten Aufgabe (302) des zweiten Computers (902) definiert, um von der erfolgreichen Vervollständigung bzw. den nicht erfolgreichen Abschluß einer ersten Aufgabe (301) des ersten Computers (901) abhängig zu sein;
Bestimmen (420) eines Aufgabennetzzustands bzw. -status (300-S) des Aufgabennetzes (300) an einem vordefinierten Synchronisationspunkt (SP-1) des Aufgabennetzes (300), wobei der Aufgabennetzstatus (300-S) eine Momentaufnahme der Status- bzw. Zustandsinformation enthält, welche an dem vorbestimmten Synchronisationspunkt (SP-1) und weiteren Synchronisationspunkten (SP-2) des Aufgabennetzes (300) an einen spezifischen Zeitpunkt verfügbar ist; und im Fall einer nicht erfolgreichen Vervollständigung der ersten Aufgabe (301) Übertragen (430) des Aufgabennetzstatus (300-S) an den zweiten Computer (902).

5. Computerprogrammprodukt (102), umfassend eine Mehrzahl von Instruktionen zur Fehleranalyse im Fall eines Aufgabenfehlers in einem Computersystem (999), welches wenigstens einen ersten Computer (901) und einen zweiten Computer (902) aufweist; wobei das Computerprogrammprodukt (102), wenn es in einen Speicher (922) des zweiten Computers (902) geladen ist, wenigstens einen Prozessor (912) des zweiten Computers (902) veranlaßt, die folgenden Schritte auszuführen:
Erhalten (510) an dem zweiten Computer (902) eines Aufgabennetzstatus bzw. - zustands (300-S) eines Aufgabennetzes (300), wobei das Aufgabennetz (300) den Start einer zweiten Aufgabe (302) des zweiten Computers (902) definiert, um von der erfolgreichen Vervollständigung bzw. dem erfolgreichen Abschluß einer ersten Aufgabe (301) des ersten Computers (901) abhängig zu sein; wobei der Aufgabennetzstatus (300-S) eine Momentaufnahme der Statusinformation enthält, welche an einer Mehrzahl von Synchronisationspunkten (SP-1, SP-2) des Aufgabennetzes (300) an einem spezifischen Zeitpunkt verfügbar ist, wobei der Aufgabennetzstatus (300-S) die nicht erfolgreiche Vervollständigung der ersten Aufgabe (301) anzeigt; und
Erzeugen (520) einer Aufgabenfehlerwarnung (A1) an dem zweiten Computer (902).

6. Computersystem (999) zur Fehleranalyse im Fall eines Aufgabenfehlers, wobei das Computersystem (999) wenigstens einen ersten Computer (901) und einen zweiten Computer (902) aufweist; wobei das Computersystem (999) umfaßt:
einen Speicher (920), der ein Aufgabennetz (300) speichert, wobei das Aufgabennetz (300) den Start einer zweiten Aufgabe (302) des zweiten Computers (902) definiert, um von der erfolgreichen Vervollständigung bzw. dem erfolgreichen Abschluß einer ersten Aufgabe (301) des ersten Computers (901) abhängig zu sein; und
einen Prozessor (910), der konfiguriert ist, um einen Aufgabennetzstatus (300-S) des Aufgabennetzes (300) an einem vorbestimmten Synchronisationspunkt (SP-1) des Aufgabennetzes (300) zu bestimmen (420), wobei der Aufgabennetzstatus (300-S) eine Momentaufnahme der Status- bzw. Zustandsinformation enthält, welche an dem vorbestimmten Synchronisationspunkt (SP-1) und weiteren Synchronisationspunkten (SP-2) des Aufgabennetzes (300) an einen spezifischen Zeitpunkt verfügbar ist, und um im Fall einer nicht erfolgreichen Vervollständigung der ersten Aufgabe (301) den Aufgabennetzstatus (300-S) an den zweiten Computer (902) zu übertragen (430).

7. Computersystem (999) nach Anspruch 6, wobei der zweite Computer (902) konfiguriert bzw. ausgelegt ist, um eine Aufgabenfederwarnung (A1) zu erzeugen (440).

8. Zweiter Computer (902) in einem Computersystem (999) zur Fehleranalyse im Fall eines Aufgabenfehlers, wobei das Computersystem (999) weiters wenigstens einen ersten Computer (901) aufweist; umfassend:
einen Speicher (922), der konfiguriert bzw. ausgelegt ist, um einen Aufgabennetzstatus (300-S) eines Aufgabennetzes (300) zu empfangen, (510), wobei das Aufgabennetz (300) den Start einer zweiten Aufgabe (302) des zweiten Computers (902) definiert, um von der erfolgreichen Vervollständigung bzw. dem erfolgreichen Abschluß einer ersten Aufgabe (301) des ersten Computers (901) abhängig zu sein; wobei der Aufgabennetzstatus (300-S) eine Momentaufnahme der Statusinformation enthält, welche an einer Mehrzahl von Synchronisationspunkten (SP-1, SP-2) des Aufgabennetzes (300) an einem spezifischen Zeitpunkt verfügbar ist, wobei der Aufgabennetzstatus (300-S) die nicht erfolgreiche Vervollständigung des ersten Jobs (301) anzeigt; und
einen Prozessor (912), der konfiguriert bzw. ausgelegt ist, um eine Aufgabenfehlerwarnung (A1) an dem zweiten Computer (902) zu erzeugen (520).

## Revendications

1. Méthode (400) d'analyse d'erreurs dans le cas d'une panne de travail dans un système informatique (999) comportant au moins un premier ordinateur (901) et un deuxième ordinateur (902); le procédé (400) comprenant les étapes suivantes:
fournir (410) un réseau de travaux (300), dans lequel le réseau de travaux (300) définit le début d'un deuxième travail (302) du deuxième ordinateur (902) devant dépendre de l'achèvement réussi d'un premier travail (301) du premier ordinateur (901);
déterminer (420) un état du réseau de travaux (300-S) du réseau de travaux (300) à un point de synchronisation prédéfini (SP-1) du réseau de travaux (300), dans lequel l'état du réseau de travaux (300-S) comprend une copie instantanée des informations d'état disponibles au point de synchronisation prédéfini (SP-1) et à d'autres points de synchronisation (SP-2) du réseau de travaux (300) à un point spécifique dans le temps, et
dans le cas d'un achèvement ayant échoué du premier travail (301), transmettre (430) l'état du réseau de travaux (300-s) au deuxième ordinateur (902).

2. Méthode (400) selon la revendication 1 comprenant l'étape suivante:
créer (440) une alerte de panne de travail (A1) sur le deuxième ordinateur (902).

3. Méthode (500) d'analyse d'erreurs en cas de panne de travail dans un système informatique (999) comportant au moins un premier ordinateur (901) et un deuxième ordinateur (902): la méthode (500) comprenant les étapes suivantes:
recevoir (510) sur le deuxième ordinateur (902) un état du réseau de travaux (300-S) d'un réseau de travaux (300), dans lequel le réseau de travaux (300) définit le début d'un deuxième travail (302) du deuxième ordinateur (902) devant dépendre de l'achèvement réussi d'un premier travail (301) du premier ordinateur (901); l'état du réseau de travaux (300-S) comprenant une copie instantanée des informations d'état disponibles sur une pluralité de points de synchronisation (SP-1, SP-2) du réseau de travaux (300) en un point spécifique dans le temps, l'état du réseau de travaux (300-S) indiquant l'achèvement ayant échoué du premier travail (301), et
créer (520) une alerte de panne de travail (A1) sur le deuxième ordinateur (902).

4. Produit programme pour ordinateur (100) comprenant une pluralité d'instructions pour une analyse d'erreurs dans le cas d'une panne de travail dans un système informatique (999) comportant au moins un premier ordinateur (901) et un deuxième ordinateur (902); le produit programme pour ordinateur (100), lorsqu'il est chargé dans une mémoire (920) d'un ordinateur (900), fait qu'au moins un processeur (910) de l'ordinateur (900) exécute les étapes suivantes:
fournir (410) un réseau de travaux (300), dans lequel le réseau de travaux (300) définit le début d'un deuxième travail (302) du deuxième ordinateur (902) devant dépendre de l'achèvement réussi d'un premier travail (301) du premier ordinateur (901);
déterminer (420) un état du réseau de travaux (300-S) du réseau de travaux (300) à un point de synchronisation prédéfini (SP-1) du réseau de travaux (300), dans lequel l'état du réseau de travaux (300-S) comprend une copie instantanée des informations d'état disponibles au point de synchronisation prédéfini (SP-1) et à d'autres points de synchronisation (SP-2) du réseau de travaux (300) en un point spécifique dans le temps, et
dans le cas d'un achèvement ayant échoué du premier travail (301), transmettre (430) l'état du réseau de travaux (300-s) au deuxième ordinateur (902).

5. Produit programme pour ordinateur (102) comprenant une pluralité d'instructions pour analyse d'erreurs en cas de panne de travail dans un système informatique (999) qui comporte au moins un premier ordinateur (901) et un deuxième ordinateur (902); le produit programme pour ordinateur (102), lorsqu'il est chargé dans une mémoire (922) du deuxième ordinateur (902) fait qu'au moins un processeur (912) du deuxième ordinateur (902) exécute les étapes suivantes:
recevoir (510) sur le deuxième ordinateur (902) un état du réseau de travaux (300-S) d'un réseau de travaux (300), dans lequel le réseau de travaux (300) définit le début d'un deuxième travail (302) du deuxième ordinateur (902) devant dépendre de l'achèvement réussi d'un premier travail (301) du premier ordinateur (901); l'état du réseau de travaux (300-S) comprenant une copie instantanée des informations d'état disponibles sur une pluralité de points de synchronisation (SP-1, SP-2) du réseau de travaux (300) en un point spécifique dans le temps, l'état du réseau de travaux (300-S) indiquant l'achèvement ayant échoué du premier travail (301), et
créer (520) une alerte de panne de travail (A1) sur le deuxième ordinateur (902).

6. Système informatique (999) d'analyse d'erreurs en cas de panne de travail, dans lequel le système informatique (999) comporte au moins un premier ordinateur (901) et un deuxième ordinateur (902); le système informatique (999) comprenant:
une mémoire (920) stockant un réseau de travaux (300), dans laquelle le réseau de travaux (300) définit le début d'un deuxième travail (302) du deuxième ordinateur (902) devant dépendre de l'achèvement réussi d'un premier travail (301) du premier ordinateur (901), et
un processeur (910) configuré pour déterminer (420) un état du réseau de travaux (300-S) du réseau de travaux (300) en un point de synchronisation prédéfini (SP-1) du réseau de travaux (300), dans lequel l'état du réseau de travaux (300-S) comprend une copie instantanée d'informations d'état disponibles au point de synchronisation prédéfini (SP-1) et d'autres points de synchronisation (SP-2) du réseau de travaux (300) en un point spécifique dans le temps, et en cas d'achèvement ayant échoué du premier travail (301), transmettre l'état du réseau de travaux (300-S) au deuxième ordinateur (902).

7. Système informatique (999) selon la revendication 6, dans lequel le deuxième ordinateur (902) est configuré pour créer (440) une alerte de panne de travail (A1).

8. Deuxième ordinateur (902) d'un système informatique (999) pour une analyse d'erreurs en cas de panne de travail, dans lequel le système informatique (999) comporte en outre au moins un premier ordinateur (901); comprenant:
une mémoire (922) configurée pour recevoir (510) un état du réseau de travaux (300-S) d'un réseau de travaux (300), dans laquelle le réseau de travaux (300) définit le début d'un deuxième travail (302) du deuxième ordinateur (902) devant dépendre de l'achèvement réussi d'un premier travail (301) du premier ordinateur (901); l'état du réseau de travaux (300-S) comprenant une copie instantanée des informations d'état disponibles en une pluralité de points de synchronisation (SP-1, SP-2) du réseau de travaux (300) en un point spécifique dans le temps, l'état du réseau de travaux (300-S) indiquant l'achèvement ayant échoué du premier travail (301), et
un processeur (912) configuré pour créer (520) une alerte de panne de travail (A1) sur le deuxième ordinateur (902).
